# EUROPEAN PATENT APPLICATION

(11) **EP 1 001 508 A2**
(43) Date of publication of application: **17.05.2000**
(21) Application number: 99121978.3
(22) Date of filing: 10.11.1999
(51) Int. Cl.: H02K 7/102, F16D 65/34

(54) **Electromagnetic brake with two independent front disks**

(30) Priority: 16.11.1998 IT BO980635
(71) Applicant: Gibierre S.r.l., 41018 S. Cesario Sul Panaro (Modena) (IT)
(72) Inventor: Bonfiglioli, Giancarlo, 41013 Castelfranco Emilia (Modena) (IT)
(74) Representative: Modiano, Guido, Dr.-Ing.

(57) **Abstract**

An electromagnetic brake (I) with two independent front disks (6a, 6b), comprising a main assembly (II) which accommodates two separate coils (19a, 19b) between which a spacer (4) made of non-magnetic material is arranged, the coils (19a, 19b) being adapted to act independently on two moving cores (5a, 5b) for pressing against the respective disks (6a, 6b).

## Description

The present invention relates to an electromagnetic brake with two independent front disks.

The purpose of a brake is to "brake" the torque of a manufacturing machine or power-using machine. Conventional electromagnetic brakes operate by means of the pressure of springs which act when there is no power.

These brakes are therefore fail-safe devices which lock the driven shaft when they are in an inactive position and release it when they are actuated electrically: locking occurs by means of a system of springs, whereas disengagement is achieved by supplying power to a coil which generates a contrasting magnetic field suitable to overcome the action of the springs.

These characteristics and this operating method are suitable for use in various fields, in which their adoption has now been routine for a long time, and make them interesting for use in elevators.

Spring-pressure brakes are in fact used:
-- when it is necessary to ensure braking in case of power failure;
-- when, in the operating cycle of a machine or system in which it is installed, the time for which the driven shaft must remain locked is longer than, or equal to, the time for which it can rotate freely.

Although the brakes that are normally in use have an adequate operating principle, they usually have a single braking disk or sometimes a plurality of disks which however do not act independently of each other; conventional brakes, therefore, are often not completely compliant with applicable safety standards related to the elevator sector.

Applicable standards in fact prescribe at least two mechanical braking elements, for obvious safety reasons, and also prescribe that it must be possible to slow the system if only one of said elements remains active.

It must be also possible to perform practical tests in this regard by deactivating the actuation of each one of the mechanical elements independently of each other.

Moreover, again according to the above-cited standards it must be possible to manually release the braking system and to perform so-called manual operation.

The aim of the present invention is therefore to provide a single braking unit which, by combining two conventional braking units which are appropriately separated from each other, makes the system suitable for use in elevators in compliance with the corresponding standards applicable to the sector.

Within the scope of this aim, an object of the present invention is to provide an electromagnetic brake with two independent front disks which is simple, relatively easy to provide in practice, safe in use, effective in operation and has a relatively low cost.

This aim, this object and others, which will become apparent hereinafter, are achieved by an electromagnetic brake with two independent front disks according to the present invention, characterized in that it comprises a main assembly which accommodates two separate coils between which a spacer made of non-magnetic material is arranged, said coils being adapted to act independently on two moving cores for pressing against the respective disks.

Further characteristics and advantages of the present invention will become apparent from the following detailed description of a preferred but not exclusive embodiment of an electromagnetic brake with two independent front disks according to the present invention, illustrated by way of non-limitative example in the accompanying drawings, wherein:

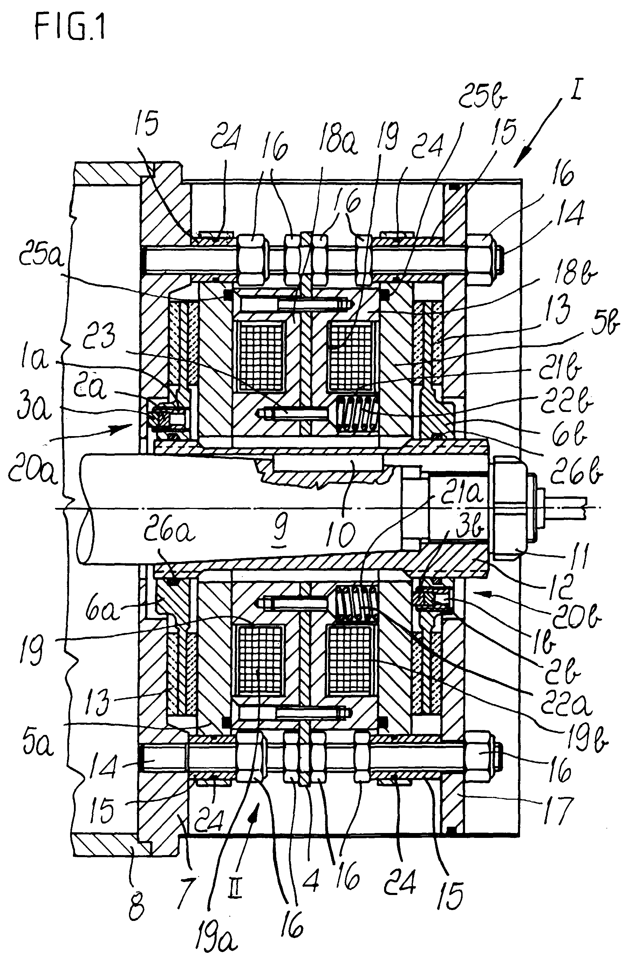

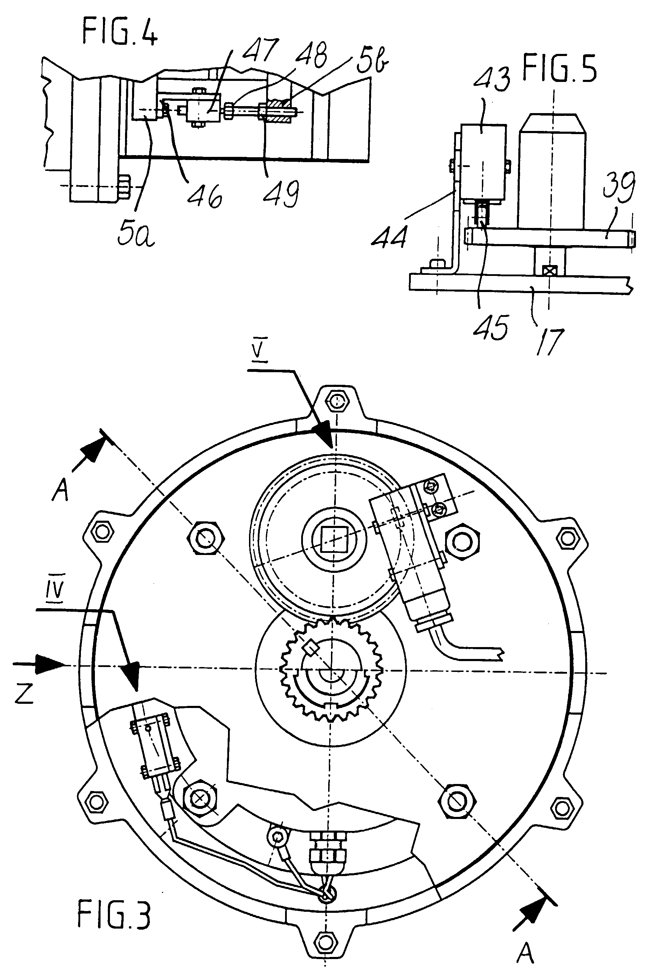

Figure 1 is a sectional side view, taken along the plane A-A of Figure 3, of an electromagnetic brake with two independent front disks according to the present invention;
Figure 2 is a side view, taken along the directrix Z of Figure 3, with some details of the brake shown in cross-section;
Figure 3 is a partially cutout front view of the brake;
Figure 4 is a view of a detail of the brake, taken along the directrix IV of Figure 3;

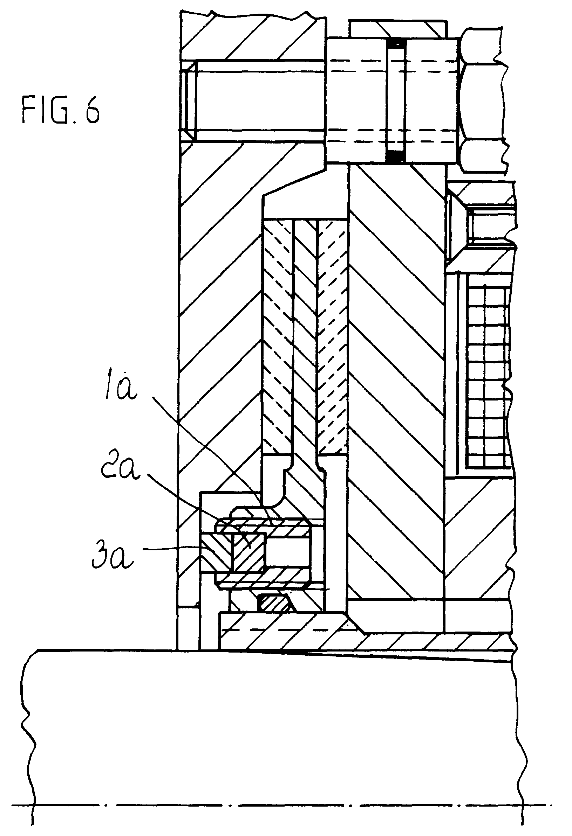

Figure 5 is a view of a detail of the brake, taken along the directrix V of Figure 3;
Figure 6 is an enlarged-scale of a detail of the sectional side view of Figure 1.

With particular reference to the above figures, the reference sign I designates an electromagnetic brake with two independent front disks according to the present invention.

The brake I comprises a main assembly II which accommodates two separate coils 19a, 19b between which a spacer 4 made of non-magnetic material is arranged: the coils act independently on two moving cores 5a, 5b for pressing against two respective disks 6a, 6b.

The brake comprises a flange 7 for fixing to a motor 8 provided with a shaft 9 on which a slotted sleeve 12 is keyed by means of a key 10 and a ring 11; the slotted hubs of the disks 6a, 6b are fitted on the sleeve 12 so that they can slide longitudinally but cannot rotate, and both faces of the disks are covered with friction material 13.

A corresponding complementary flange 17 is fixed in front of the flange 7 by means of a plurality of stud bolts 14 which are arranged perimetrically and by means of centering bushes 15, nuts and lock nuts 16.

The fixed main assembly II is fitted between the flange 7 and the complementary flange 17 and is constituted by two coil bodies 18a, 18b within which the two coils 19a, 19b are arranged.

The coil bodies 18a, 18b are mutually separated by the spacer 4, which is peripherally crossed by the stud bolts 14 and is rigidly coupled thereon by means of nuts and lock nuts.

The two flat moving cores 5a, 5b are fitted in the two compartments formed between the flange, the central assembly and the complementary flange so that they can slide longitudinally but cannot rotate: sets of compression springs 22a, 22b are mounted in respective sets of seats 21a, 21b which are formed in the coil bodies and are open toward the cores 5a, 5b; the springs are adapted to press the moving cores outward in order to clamp the disks between the movable cores 5a, 5b, the flange 7 and the complementary flange 17: the seats 21 continue with threaded holes for corresponding screws 23 which keep the assembly of the components that constitute the bodies of the two coils 3a, 3b joined to the spacer 4.

Annular seats 24 for corresponding sealing rings, advantageously of the type known as O-ring, are formed in the bushes 15; such rings are adapted to avoid vibrations during the sliding of the moving cores 5a, 5b, whereas front annular seats 25a, 25b for similar noise damping rings of the type known as O-ring and made of a material such as rubber are formed in the cores 5a, 5b; annular slots 26a, 26b are also formed at the slotted hubs of the disks 6a, 6b in order to accommodate rings of the O-ring type which are adapted to reduce vibration and noise.

The supply of power to the coils attracts the moving cores toward the central assembly in order to allow the shaft to rotate: by disconnecting the coils from the power supply, the two disks, clamped by the compression springs between the moving cores, the flange and the complementary flange, brake the shaft.

In order to also allow vertical mounting of the brake unit (and avoid the sliding of the braking material 13 of the braking disks 6a, 6b respectively on the flange 7 and on the moving core 5b), there are provided two sets, one for each disk, of supporting sliding blocks 20a, 20b: the sliding blocks 20a, 20b are respectively constituted by a pad 3a, 3b made of antifriction material, by an elastic element 2a, 2b which can be made of spring steel, rubber or other material, and by a registration element 1a, 1b which ensures separation of the respective disk 6a, 6b from the braking plane when the effect of the springs 22a, 22b ceases.

The reference numeral 27 generally designates an assembly for the manual release of the disks, which comprises a substantially semicircular or horseshoe-shaped bracket 27a which is arranged so as to straddle the main body and has, at its centerline, a lever 28 for manual actuation at right angles to its plane of arrangement (arrow A): the bracket 27a has, at its two S-shaped ends, two diametrically mutually opposite holes 30 for articulation to two corresponding pivots which are inserted in the moving core 5b so as to be diametrically aligned; the ends 27b of the bracket are provided with two pivots 31 for articulation to one of the ends of respective links 32, the other ends of which are articulated to two diametrical pivots 33 of the other moving core 6b: actuation in the direction of the arrow A of the lever 28 is adapted to produce a relative mutual approach of the two moving cores and therefore to release the brake.

Symmetrically with respect to the pivots 31, the ends 27b of the bracket have a further pair of pivots 34 to which it is possible to articulate the links 32 in order to achieve release of the brake when the lever 28 is actuated in the opposite direction with respect to the arrow A.

The reference numeral 35 generally designates an assembly for manually actuating the shaft: the slotted sleeve 12 protrudes at the plane of the outer face of the complementary flange 17; a pivot 37 is fixed laterally with respect to the sleeve on the complementary flange 17, and a hub 38 is fitted thereon so that it can slide axially, a gear 39 being rigidly coupled to the hub 38.

The gear 39 moves, in contrast with elastic means 40 constituted by a helical compression spring which is interposed between the end face of the hub 38 and the pivot 37, from a position in which it is spaced from the sleeve, as shown in the figure, to a position for meshing with it: the hub 38 has means 41 for interlocking front coupling for the end of a crank which can be actuated manually.

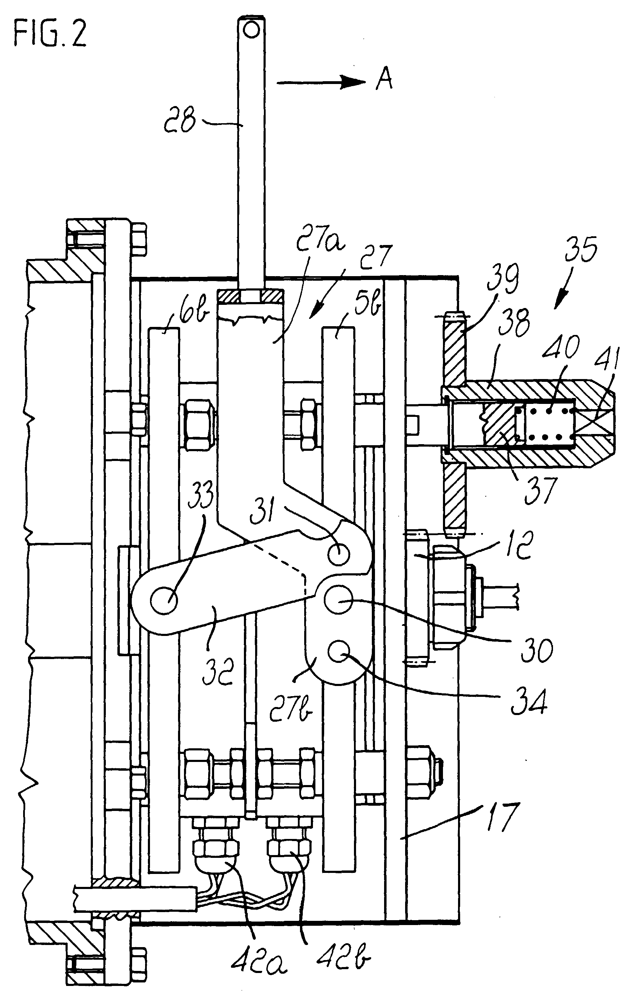

Figure 2 illustrates the two independent cable clamps 42a, 42b for supplying the coils 19a, 19b.

Provisions are made for placing a microswitch 43 which is connected, by means of a bracket 44, to the complementary flange 17 and in which a probe 45 is meant to detect the presence of the gear 39 and notify the control panel that the gear 39 is disengaged from the sleeve 12. The moving core 5a may also support, by means of a bracket 46, a microswitch 47 in which the probe is constituted by an elongated screw 48 on which a stroke adjustment nut 49 is screwed. The probe 48 is fixed to the core 5b and is adapted to detect the approach of the coils 5a, 5b in order to notify the control panel that the brake is open.

It has thus been observed that the invention achieves the intended aim and objects and in particular that an electromagnetic brake with two independent front disks is provided in which the disks are independent from the electrical point of view as well, in order to allow to check the efficiency of the braking action of the disks, considered individually; the brake also provides for easy release, suitable accessories for performing manual actuation, and suitable elements for producing safety-related signals.

The invention thus conceived is susceptible of numerous modifications and variations, all of which are within the scope of the inventive concept.

All the details may also be replaced with other technically equivalent ones.

In practice, the materials employed, as well as the shapes and the dimensions, may be any according to requirements without thereby abandoning the scope of the protection of the appended claims.

The disclosures in Italian Patent Application No. B098A000635 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electromagnetic brake with two independent front disks, characterized in that it comprises a main assembly which accommodates two separate coils between which a spacer made of non-magnetic material is arranged, said coils being adapted to act independently on two moving cores for pressing against the respective disks.

2. The brake according to claim 1, characterized in that, in order to allow vertical mounting and avoid the sliding of the braking material of the braking disks, it comprises two sets of supporting sliding blocks respectively constituted by a pad made of antifriction material, an elastic element and a registration element suitable to ensure separation of the respective disk from the braking plane.

3. The brake according to claim 1, characterized in that it comprises an assembly for manually releasing the disks which is constituted by a bracket which is substantially semicircular and is arranged so as to straddle the main assembly, which is provided, at the centerline, with a lever for manual actuation at right angles to its plane of arrangement and has, at its ends, two diametrically opposite holes for articulation to two diametrical pivots of one of said moving cores and two additional pivots for articulation to one of the ends of respective links, the other ends of which are articulated to two diametrical pivots of the other moving core.

4. The brake according to claim 1, characterized in that it comprises an assembly for the manual actuation of a motor shaft which comprises a slotted sleeve which protrudes from the outer face of a complementary flange of the brake which is crossed by the shaft and a pivot which is fixed laterally with respect to said sleeve and on which a hub is axially slidingly fitted, a gear being rigidly coupled to said hub and being movable, in contrast with elastic means, from a position in which it is spaced from the sleeve to a position for meshing with it, said hub being provided with means for front interlocking coupling for a crank which can be actuated manually.

5. The brake according to one or more of the preceding claims, characterized in that it comprises a microswitch which is rigidly coupled to said complementary flange and in which a probe is adapted to detect said gear in order to report a disengaged condition of said gear with respect to said sleeve.

6. The brake according to one or more of the preceding claims, characterized in that it comprises a microswitch which is rigidly coupled to a moving core in which the probe of the microswitch is constituted by an elongated screw adapted to detect the presence of the other moving core in order to notify a control panel of an open condition of the brake.
